# EUROPÄISCHE PATENTSCHRIFT

(11) **EP 3 564 708 B1**
(45) Veröffentlichungstag und Bekanntmachung des Hinweises auf die Patenterteilung: **16.03.2022**
(21) Anmeldenummer: 19170782.7
(22) Anmeldetag: 24.04.2019
(51) Int. Cl.: G01S 13/90

(54) **SYNTHETIK-APERTUR-RADARVERFAHREN ZUR FERNERKUNDUNG DER ERDOBERFLÄCHE UND SYNTHETIK-APERTUR-RADARVORRICHTUNG**
SYNTHETIC APERTURE RADAR METHOD FOR REMOTE SENSING OF THE EARTH´S SURFACE AND SYNTHETIC APERTURE RADAR DEVICE
PROCÉDÉ RADAR À SYNTHÈSE D'OUVERTURE PERMETTANT DE TÉLÉDÉTECTER LA SURFACE DE LA TERRE ET DISPOSITIF RADAR À SYNTHÈSE D'OUVERTURE

(30) Priorität: 30.04.2018 DE 102018206670
(43) Veröffentlichungstag der Anmeldung: 06.11.2019
(73) Patentinhaber: Deutsches Zentrum für Luft- und Raumfahrt e.V., 51147 Köln (DE)
(72) Erfinder: Villano, Michelangelo, 82205 Gilching (DE); Steinbrecher, Ulrich, 82269 Geltendorf (DE); Krieger, Gerhard, 82131 Gauting (DE); Moreira, Alberto, 82140 Olching (DE)
(74) Vertreter: Fink Numrich Patentanwälte PartmbB

(56) Entgegenhaltungen:
- WO-A1-2016/022637
- CN-B- 103 885 052
- GERHARD KRIEGER ET AL: "Advanced Concepts for High-Resolution Wide-Swath SAR Imaging", 8TH EUROPEAN CONFERENCE ON SYNTHETIC APERTURE RADAR, 7. Juni 2010 (2010-06-07), Seiten 524-527, XP055081469, Aachen, Germany ISBN: 978-3-80-073272-2
- WEIKONG QI ET AL: "A novel operation mode for spaceborne polarimetric SAR", SCIENCE CHINA INFORMATION SCIENCES, Bd. 54, Nr. 4, 28. Februar 2011 (2011-02-28), Seiten 884-897, XP055621241, Heidelberg ISSN: 1674-733X, DOI: 10.1007/s11432-011-4183-1
- Michelangelo Villano ET AL: "Imaging a wide swath with full polarimetry", Proceedings 'Polarimetric and Interferometrie SAR Workshop, 30. Januar 2015 (2015-01-30), Seiten 1-7, XP055595526, Gefunden im Internet: URL:https://elib.dlr.de/95648/1/269villano .pdf [gefunden am 2019-06-11]

## Beschreibung

Die Erfindung betrifft ein Synthetik-Apertur-Radarverfahren zur Fernerkundung der Erdoberfläche sowie eine entsprechende Synthetik-Apertur-Radarvorrichtung.

SAR-Systeme (SAR = Synthetic Aperture Radar) ermöglichen die Fernerkundung der Erdoberfläche über die Erfassung von an der Erdoberfläche reflektierten Radarpulsen, die von einer Radareinrichtung ausgesendet werden, welche sich mit konstanter Geschwindigkeit über der Erdoberfläche in einer sog. Azimut-Richtung bewegt. Der Begriff der Erdoberfläche ist dabei weit zu verstehen und kann gegebenenfalls auch die Oberfläche eines anderen Himmelskörpers (vorzugsweise eines anderen Planeten) als der Erde betreffen.

Die mit einem SAR-System empfangenen Radarechos werden in digitale SAR-Rohdaten gewandelt, welche für eine Vielzahl der ausgesendeten Radarpulse, die mit entsprechenden Azimut-Positionen korrelieren, jeweils Datenabtastungen für eine Vielzahl von sog. Range-Positionen enthalten, welche unterschiedliche Abstände zwischen der Erdoberfläche und der Azimut-Richtung repräsentieren und demzufolge Radarechos aus unterschiedlichen Richtungen darstellen. Die Range-Positionen können als sog. Slant-Range (Schrägentfernung) oder als sog. Ground-Range (Bodenentfernung) angegeben werden. Die Slant-Range entspricht dabei dem Abstand der Radareinrichtung von der Erdoberfläche in der Richtung, aus welcher ein Radarecho empfangen wird. Die Ground-Range korrespondiert mit der Projektion der Slant-Range auf die Erdoberfläche. Beide Größen können ineinander umgerechnet werden.

In herkömmlichen SAR-Systemen besteht das Problem, dass die Radareinrichtung beim Aussenden eines jeweiligen Radarpulses keine Radarechos empfangen kann. Dies führt dazu, dass ein kontinuierlicher Streifen von der Erdoberfläche nur bis zu einer bestimmten Breite in Richtung der Ground-Range erfasst werden kann. Mit anderen Worten entstehen sog. blinde Bereiche (englisch: blind ranges) an Range-Positionen, bei denen bei Empfang des Radarechos gerade ein Radarpuls ausgesendet wurde. Die Breite des kontinuierlichen Streifens kann zwar durch eine Verminderung der Pulswiederholrate beim Aussenden der Radarpulse vergrößert werden, dies führt jedoch zu einer Verschlechterung der Azimut-Auflösung der aus den SAR-Rohdaten gewonnenen SAR-Bilder.

Um die Erfassung eines breiten Streifens mit guter Azimut-Auflösung zu gewährleisten, sind sog. Multi-Beam-SAR-Systeme bekannt. Diese Systeme umfassen als Radareinrichtung eine planare Antenne mit einer Vielzahl von Antennenelementen oder eine Reflektorantenne mit einem Array von Speise-Antennenelementen (auch als Feed-Array bezeichnet). Auf diese Weise können Radarechos unterschiedlicher Radarpulse, die gleichzeitig aus verschiedenen Richtungen von der Erdoberfläche empfangen werden, separiert werden. Hierzu wird digitale Strahlformung in Elevation (d.h. seitlich schräg nach unten mit ca. 90° zur Flugrichtung) genutzt. Mittels dieser digitalen Strahlformung werden mit mehreren Empfangs-Strahlungskeulen bzw. Beams die Radarechos von unterschiedlichen Pulsen aufgezeichnet. Die digitale Strahlformung wird nach Digitalisierung der empfangenen Radarechos durchgeführt und liefert die eingangs erwähnten SAR-Rohdaten.

Zur Vermeidung von blinden Bereichen ist es aus dem Stand der Technik ferner bekannt, die Pulswiederholrate der ausgesendeten Radarpulse in einem SAR-System, wie z.B. dem oben beschriebenen Multi-Beam-SAR-System, zu variieren. Dies hat zur Folge, dass sich kein durchgehender blinder Bereich entlang der Azimut-Richtung ausbildet, sondern die blinden Bereiche in Range-Richtung zueinander versetzt sind. Mit geeigneten Rechenverfahren können diese versetzten Bereiche interpoliert werden, so dass ein durchgängiger breiter Streifen von der Erdoberfläche erfasst wird. Multi-Beam-SAR-Systeme mit variabler Pulswiederholrate werden in der Regel auch als staggered SAR bezeichnet.

SAR-Systeme können als einfach-polarimetrische Systeme (englisch: singlepolarimetric oder single-pol) ausgestaltet sein. Dabei werden die Radarpulse immer mit der gleichen Wellenpolarisation (z.B. horizontal oder vertikal) ausgesendet und in einer einzelnen Wellenpolarisation empfangen. In der Regel entspricht die Sende-Polarisation beim Aussenden der Empfangs-Polarisation beim Empfang. Jedoch kann die Polarisation bei Empfang gegebenenfalls auch anders als beim Aussenden der Radarpulse sein.

Ferner gibt es im Stand der Technik SAR-Systeme mit mehreren Polarisationen. Bei solchen Systemen werden die Radarechos in unterschiedlichen Polarisationen empfangen und gegebenenfalls werden die Radarpulse auch mit unterschiedlichen Polarisationen ausgesendet. In einem sog. dual-polarimetrischen SAR-System (englisch: dual-polarimetric oder dual-pol) werden die Radarpulse normalerweise mit der gleichen Polarisation (z.B. horizontal) ausgesendet, sie werden jedoch in zwei orthogonalen Polarisationsrichtungen (z.B. horizontal und vertikal) empfangen. Auf diese Weise entstehen zwei separate Empfangskanäle in den beiden Polarisationsrichtungen.

Darüber hinaus gibt es sog. quad-polarimetrische SAR-Systeme (englisch: quadrature-polarimetric oder quad-pol), die häufig auch als vollpolarimetrische SAR-Systeme bezeichnet werden. Diese Systeme verwenden zwei unterschiedliche - Polarisationen beim Aussenden der Radarpulse. Mit anderen Worten werden die Radarpulse abwechselnd in den beiden unterschiedlichen Polarisationen ausgesendet, wobei die Polarisationen z.B. horizontal und vertikal sind. Bei Empfang der Radarechos werden diese wiederum über zwei Empfangskanäle mit zwei unterschiedlichen Polarisationen erfasst, wobei meistens die gleichen Polarisationen wie beim Aussenden verwendet werden. Hierdurch entstehen vier Polarisationskanäle für die empfangenen Radarechos.

Mit einem dual- oder quad-polarimetrischen SAR-Radarsystem werden somit für mehrere Polarisationskanäle SAR-Rohdaten gewonnen. Falls in einem dual-polarimetrischen SAR-System die Sende-Polarisation mit einer der Empfangs-Polarisationen zusammenfällt, existiert dabei ein kopolarer Polarisationskanal, bei dem die Polarisation des ausgesendeten Radarpulses der Polarisation bei Empfang entspricht. Ferner gibt es in diesem Fall einen kreuzpolaren Polarisationskanal, bei dem die Polarisation bei Empfang unterschiedlich zu der beim Aussenden der Radarpulse verwendeten Polarisation ist. Im Unterschied hierzu existieren bei einem vollpolarimetrischen SAR-System vier Polarisationskanäle. Falls die gleichen Sendeund Empfangs-Polarisationen verwendet werden, existieren zwei kopolare Polarisationskanäle, bei denen die Polarisationsrichtungen der ausgesendeten und empfangenen Radarsignale identisch sind, sowie zwei kreuzpolare Polarisationskanäle, bei denen sich die Polarisationen beim Aussenden und bei Empfang unterscheiden.

Häufig werden in SAR-Systemen mit mehreren Polarisationen horizontal und vertikal polarisierte Wellen genutzt. Bei der horizontalen Polarisation verläuft der E-Feld-Vektor der Radarstrahlung parallel zur Azimut-Richtung. Bei der vertikalen Polarisation steht der E-Feld-Vektor der Radarstrahlung senkrecht auf der Azimut-Richtung. Diese Polarisationen werden in der Regel mit den Buchstaben "H" (für horizontal) bzw. "V" (für vertikal) bezeichnet. Kopolare Polarisationskanäle haben dabei die Bezeichnung HH bzw. VV. Dabei bedeutet HH, dass der ausgesendete Radarpuls horizontal polarisiert ist und das Radarecho ebenfalls in horizontaler Polarisation empfangen wurde. Analog bedeutet VV, dass der ausgesendete Radarpuls vertikal polarisiert ist und das Radarecho in vertikaler Polarisation empfangen wurde. Ein kreuzpolarer Polarisationskanal VH bedeutet demgegenüber, dass der Radarpuls horizontal polarisiert ist, wohingegen das Radarecho in vertikaler Polarisation empfangen wurde. Analog bedeutet der kreuzpolare Polarisationskanal HV, dass der Radarpuls vertikal polarisiert ist, wohingegen das Radarecho in horizontaler Polarisation empfangen wurde.

Die aus dual- oder quad-polarimetrischen SAR-Systemen gewonnenen SAR-Rohdatensätze der einzelnen Polarisationskanäle werden mit an sich bekannten Verfahren weiterverarbeitet, um zusätzliche Informationen über besondere Streuobjekte in den erfassten SAR-Bildern zu gewinnen. Hierbei macht man sich die Erkenntnis zunutze, dass sich die Polarisation von reflektierter Radarstrahlung in Abhängigkeit von Eigenschaften der streuenden Objekte auf der Erdoberfläche verändern kann.

Vollpolarimetrische SAR-Systeme liefern eine Vielzahl von Informationen zur Beschaffenheit des erfassten Bereichs der Erdoberfläche. Sie haben jedoch den Nachteil, dass im Vergleich zu einfach- oder dual-polarimetrischen SAR-Systemen nur ein schmaler Streifen bei einem Überflug über die Erdoberfläche erfasst werden kann. Dies liegt daran, dass vollpolarimetrische SAR-Systeme durch den alternierenden Wechsel der Polarisationen beim Senden zu einer höheren Pulswiederholrate führen, die einen schmaleren Streifen bedingt, da es sonst zu unerwünschten Range-Mehrdeutigkeiten (englisch: range ambiguities) in den SAR-Bildern kommt. Eine Vergrößerung der zeitlichen Abstände zwischen dem Aussenden der unterschiedlich polarisierten Radarpulse ist dabei nicht möglich, da dies zu Azimut-Mehrdeutigkeiten (englisch: azimuth ambiguities) in den SAR-Bildern führen würde.

Aufgrund der unterschiedlichen Anforderungen von einfach-polarimetrischen bzw. dual-polarimetrischen SAR-Systemen einerseits und vollpolarimetrischen SAR-Systemen andererseits werden SAR-Systeme bis dato immer nur in einem einzelnen polarimetrischen Betriebsmodus (d.h. einfach-polarimetrisch oder dualpolarimetrisch oder vollpolarimetrisch) betrieben.

Dokument Gerhard Krieger et al.: "Advanced Concepts for High-Resolution Wide-Swath SAR Imaging", 8th European Conference on Synthetic Aperture Radar, 7. Juni 2010, Seiten 524-527, offenbart verschiedene SAR-Systeme und zugehörige Betriebsmodi. Unter anderem wird ein SAR-Betriebsmodus beschrieben, bei dem Radarechos über mehrere Empfangskeulen für unterschiedliche Bursts empfangen werden. Die Bursts unterscheiden sich in der Pulswiederholrate der ausgesendeten Radarpulse.

Aufgabe der Erfindung ist es, ein Synthetik-Apertur-Radarverfahren sowie eine entsprechende Vorrichtung zu schaffen, welche gleichzeitig SAR-Rohdaten in mehreren polarimetrischen Betriebsmodi liefern, bei denen die abgebildeten Streifen für die verschiedenen polarimetrischen Betriebsmodi unterschiedlich breit sind.

Diese Aufgabe wird durch das Verfahren gemäß Patentanspruch 1 bzw. die Vorrichtung gemäß Patentanspruch 11 gelöst. Weiterbildungen der Erfindung sind in den abhängigen Ansprüchen definiert.

Das erfindungsgemäße Radarverfahren dient zur Fernerkundung der Erdoberfläche über eine Radareinrichtung auf zumindest einem Flugobjekt (vorzugsweise auf zumindest einem Satelliten), das sich in eine Azimut-Richtung über der Erdoberfläche bewegt, wobei die Radareinrichtung im Sendebetrieb Radarpulse aussendet und im Empfangsbetrieb die an der Erdoberfläche reflektierten Radarechos dieser Radarpulse empfängt. Mit anderen Worten ist die Radareinrichtung beim Aussenden der Radarpulse im Sendebetrieb und befindet sich ansonsten im Empfangsbetrieb. Zum Senden und Empfangen der Radarpulse enthält die Radareinrichtung sowohl eine oder mehrere Sendeantennen als auch eine oder mehrere Empfangsantennen, wobei eine jeweilige Antenne gegebenenfalls sowohl als Sendeantenne als auch als Empfangsantenne fungieren kann.

Der obige Begriff des zumindest einen Flugobjekts ist weit zu verstehen und kann in einer Variante ein einzelnes Flugobjekt mit einer darauf befindlichen Radareinrichtung umfassen. Ebenso kann das zumindest eine Flugobjekt zwei oder mehrere, sich synchron bewegende Flugobjekte umfassen, wobei sich in diesem Fall die Radareinrichtung auf mehrere Flugobjekte verteilt. Beispielsweise kann nur auf einem Flugobjekt eine Sendeantenne der Radareinrichtung vorgesehen sein, wobei jedoch in allen Flugobjekten Empfangsantennen für das Radarecho aus unterschiedlichen Blickwinkeln integriert sind.

Im Sendebetrieb werden im erfindungsgemäßen Verfahren zu aufeinander folgenden Sendezeitpunkten abwechselnd erste und zweite Radarpulse durch die Radareinrichtung ausgesendet. Das heißt, auf einen ersten Radarpuls folgt ein zweiter Radarpuls und auf einen zweiten Radarpuls folgt ein erster Radarpuls. Ein jeweiliger erster Radarpuls weist eine erste Sende-Polarisation auf und wird mit einem Strahlungsdiagramm ausgesendet, das (ausschließlich) eine erste Breite auf der Erdoberfläche in Range-Richtung senkrecht zur Azimut-Richtung abdeckt. Ein jeweiliger zweiter Radarpuls weist eine zweite Sende-Polarisation auf, welche unterschiedlich zu der ersten Sende-Polarisation ist, und er wird mit einem Strahlungsdiagramm ausgesendet, das (ausschließlich) eine zweite Breite auf der Erdoberfläche in der Range-Richtung senkrecht zur Azimut-Richtung abdeckt. Die erste Breite entspricht dabei einem ersten Streifen in Azimut-Richtung auf der Erdoberfläche, d.h. der erste Streifen erstreckt sich in Längsrichtung entlang der Azimut-Richtung und hat in Range-Richtung die oben genannte erste Breite. Demgegenüber entspricht die zweite Breite einem zweiten Streifen in Azimut-Richtung auf der Erdoberfläche, d.h. der zweite Streifen erstreckt sich in Längsrichtung entlang der Azimut-Richtung und hat in Range-Richtung die oben genannte zweite Breite. Der erste Streifen enthält den gesamten zweiten Streifen.

Die zweite Breite ist kleiner als die erste Breite, da aus den Radarechos aus der zweiten Breite polarimetrische Daten gewonnen werden, welche auf Radarpulsen mit unterschiedlichen Sende-Polarisationen beruhen, was zu einer höheren Pulswiederholrate führt, so dass nur ein schmaler Streifen mit ausreichender Qualität aufgrund des Auftretens von Range-Mehrdeutigkeiten erfasst werden kann.

Im Empfangsbetrieb werden im erfindungsgemäßen Verfahren sowohl in einer ersten Empfangs-Polarisation und in einer zweiten Empfangs-Polarisation die Radarechos der ersten und zweiten Radarpulse durch die Radareinrichtung empfangen, wodurch ein erster bis vierter Polarisationskanal gebildet wird. Der erste Polarisationskanal enthält die in der ersten Empfangs-Polarisation empfangenen Radarechos der ersten Radarpulse. Der zweite Polarisationskanal enthält die in der zweiten Empfangs-Polarisation empfangenen Radarechos der ersten Radarpulse. Der dritte Polarisationskanal enthält die in der ersten Empfangs-Polarisation empfangenen Radarechos der zweiten Radarpulse. Der vierte Polarisationskanal enthält die in der zweiten Empfangs-Polarisation empfangenen Radarechos der zweiten Radarpulse.

Die oben definierten Sende- und Empfangs-Polarisationen können ggf. unterschiedlich sein. In einer bevorzugten Ausführungsform entspricht jedoch die erste Sende-Polarisation der ersten Empfangs-Polarisation und die zweite Sende-Polarisation der zweiten Empfangs-Polarisation. In diesem Fall stellen der erste und der vierte Polarisationskanal einen kopolaren Polarisationskanal dar, bei dem Sende- und Empfangs-polarisation zusammenfallen, wohingegen der zweite und der dritte Polarisationskanal ein kreuzpolarer Polarisationskanal ist, bei dem sich die Sende- und Empfangspolarisation unterscheiden. Der Begriff der Empfangs-Polarisation ist hier und im Folgenden weit zu verstehen. Zwar werden die Radarechos der entsprechenden Empfangs-Polarisation vorzugsweise mit einer Antenne erfasst, welche direkt in der Empfangs-Polarisation empfängt. Nichtsdestotrotz können im Falle, dass zwei Sende-Polarisationen und zwei Empfangs-Polarisationen verwendet werden, die Signale durch eine nachgeschaltete Signalverarbeitung in jede Sende- und Empfangs-Polarisation umgerechnet werden.

Die empfangenen Radarechos werden digitalisiert und mittels digitaler Strahlformung werden aus diesen Radarechos mehrere SAR-Rohdatensätze ermittelt. Wie oben beschrieben, enthält ein jeweiliger SAR-Rohdatensatz für eine Vielzahl der im entsprechenden Polarisationskanal ausgesendeten Radarpulse jeweils Datenabtastungen für eine Vielzahl von Range-Positionen. Die Datenabtastungen entsprechen dabei den Radarechos mit einer Empfangs-Polarisation entsprechend dem betrachteten Polarisationskanal. Durch die digitale Strahlformung können gleichzeitig empfangene Radarechos von verschiedenen Radarpulsen mittels mehrerer Strahlungskeulen in Elevation aufgelöst werden, wobei eine jeweilige Strahlungskeule dem Radarecho eines bestimmten Pulses folgt.

Die im erfindungsgemäßen Verfahren ermittelten SAR-Rohdatensätze umfassen zumindest die folgenden Datensätze:
i) einen ersten SAR-Rohdatensatz, der Radarechos eines Polarisationskanals aus einem Paar von Polarisationskanälen für die gesamte erste Breite enthält, wobei das Paar von Polarisationskanälen den ersten und zweiten Polarisationskanal umfasst;
ii) einen zweiten SAR-Rohdatensatz, der entweder die Radarechos des anderen, nicht im ersten SAR-Rohdatensatz verwendeten Polarisationskanals aus dem Paar von Polarisationskanälen für die gesamte erste Breite enthält oder der die Radarechos des dritten Polarisationskanals für die gesamte zweite Breite enthält;
iii) einen dritten SAR-Rohdatensatz, der die Radarechos des vierten Polarisationskanals für die gesamte zweite Breite enthält.

Unter Radarechos für eine erste bzw. zweite Breite sind dabei die aus der entsprechenden Breite stammenden Radarechos zu verstehen. In einer bevorzugten Variante, in welcher die erste Sende-Polarisation der ersten Empfangs-Polarisation entspricht und die zweite Sende-Polarisation der zweiten Empfangs-Polarisation entspricht, werden in zwei der ersten bis dritten SAR-Rohdatensätze kopolare Polarisationskanäle verwendet, wohingegen der übrige SAR-Rohdatensatz einen kreuzpolaren Polarisationskanal verwendet. Das erfindungsgemäße Verfahren zeichnet sich dadurch aus, dass gleichzeitig sowohl einfach-polarimetrische bzw. dual-polarimetrische SAR-Rohdaten für einen breiten Streifen als auch polarimetrische SAR-Rohdaten mit mindestens drei Polarisationskanälen für einen schmaleren Streifen gewonnen werden können. Es werden somit gleichzeitig ein einfach/dual-polarimetrischer und ein polarimetrischer Betriebsmodus mit mindestens drei Polarisationskanälen (vorzugsweise ein quad-polarimetrischer Betriebsmodus) realisiert. Üblicherweise enthält ein quad-polarimetrischer Betriebsmodus zwei kreuzpolare Polarisationskanäle. Diese werden jedoch in der Regel zusammengeführt, da sie bis auf den Rauschanteil gleich sind. Demzufolge ist hier und im Folgenden unter einem quad-polarimetrischen Betriebsmodus auch ein Betriebsmodus zu verstehen, der zumindest einen kreuzpolaren Polarisationskanal sowie zwei kopolare Polarisationskanäle umfasst.

Erfindungsgemäß wird ein einfach-polarimetrischer Betriebsmodus durch den ersten SAR-Rohdatensatz realisiert. Im Falle, dass noch ein weiterer SAR-Rohdatensatz mit Radarechos für die gesamte erste Breite ermittelt wird, können auch dual-polarimetrische Rohdaten gewonnen werden. Durch den ersten bis dritten SAR-Rohdatensatz werden darüber hinaus SAR-Rohdaten für eine Datenakquisition aus mindestens drei Polarisationskanälen für die gesamte zweite Breite gebildet.

In einer besonders bevorzugten Ausführungsform sind die erste Sende-Polarisation und die zweite Sende-Polarisation sowie die erste Empfangs-Polarisation und die zweite Empfangs-Polarisation lineare Polarisationen, wobei die erste Sende-Polarisation und die erste Empfangs-Polarisation vorzugsweise eine horizontale Polarisation (d.h. eine Polarisation in Azimut-Richtung) sind und die zweite Sende-Polarisation und die zweite Empfangs-Polarisation vorzugsweise eine vertikale Polarisation d.h. eine Polarisation senkrecht zur Azimut-Richtung) sind. Nichtsdestotrotz können auch andere Polarisationen für die erste und zweite Sende- bzw. Empfangs-Polarisation gewählt werden, z.B. zirkulare Polarisationen. Entscheidend ist jedoch, dass sich die erste Sende-Polarisation und die zweite Sende-Polarisation voneinander unterscheiden und dass sich die erste Empfangs-Polarisation und die zweite Empfangs-Polarisation voneinander unterscheiden.

In einer weiteren bevorzugten Ausführungsform ist die zweite Breite im Wesentlichen 60 % und vorzugsweise im Wesentlichen 50 % der ersten Breite oder gegebenenfalls auch weniger.

Um die Ausbildung von durchgängigen blinden Bereichen zu vermeiden, wird in einer weiteren bevorzugten Ausführungsform die Pulswiederholrate der ersten Radarpulse und/oder der zweiten Radarpulse über die Zeit variiert. Vorzugsweise werden dabei sowohl die Pulswiederholrate der ersten Radarpulse als auch die Pulswiederholrate der zweiten Radarpulse über diese Zeit hinweg variiert.

In einer weiteren, besonders bevorzugten Ausführungsform umfassen die mehreren SAR-Rohdatensätze ausschließlich die folgenden Datensätze:
- den ersten SAR-Rohdatensatz, der Radarechos eines Polarisationskanals aus einem Paar von Polarisationskanälen für die gesamte erste Breite enthält, wobei das Paar von Polarisationskanälen den ersten und zweiten Polarisationskanal umfasst;
- den zweiten SAR-Rohdatensatz, der in dieser Ausführungsform die Radarechos des anderen, nicht im ersten SAR-Rohdatensatz verwendeten Polarisationskanals aus dem Paar von Polarisationskanälen für die gesamte erste Breite enthält;
- den dritten SAR-Rohdatensatz, der die Radarechos des vierten Polarisationskanals für die gesamte zweite Breite enthält;
- einen vierten SAR-Rohdatensatz, der die Radarechos des dritten Polarisationskanals für die gesamte zweite Breite enthält.

Durch die Verwendung der oben definierten ersten bis vierten SAR-Rohdatensätze wird sowohl die Gewinnung von dual-polarimetrischen Daten für die erste Breite als auch die Gewinnung von quad-polarimetrischen Daten für die zweite Breite sichergestellt, sofern die erste Sende-Polarisation der ersten Empfangs-Polarisation und die zweite Sende-Polarisation der zweiten Empfangs-Polarisation entspricht. Die quad-polarimetrischen Daten enthalten dabei beide kreuzpolaren Polarisationskanäle. Hierdurch wird die Qualität der quad-polarimetrischen Datenakquisition gegenüber dem Fall, in dem nur ein kreuzpolarer Polarisationskanal berücksichtigt wird, verbessert. Diese Variante stellt eine besonders bevorzugte Implementierung des erfindungsgemäßen Verfahrens dar.

In einer weiteren Variante des erfindungsgemäßen Verfahrens umfassen die mehreren SAR-Rohdatensätze ausschließlich die folgenden Datensätze:
- den ersten SAR-Rohdatensatz, der Radarechos eines Polarisationskanals aus einem Paar von Polarisationskanälen für die gesamte erste Breite enthält, wobei das Paar von Polarisationskanälen den ersten und zweiten Polarisationskanal umfasst;
- den zweiten SAR-Rohdatensatz, der in dieser Variante die Radarechos des dritten Polarisationskanals für die gesamte zweite Breite enthält;
- den dritten SAR-Rohdatensatz, der die Radarechos des vierten Polarisationskanals für die gesamte zweite Breite enthält.

Mit dieser Variante werden einfach-polarimetrische Daten sowie quad-polarimetrische Daten mit lediglich einem kreuzpolaren Polarisationskanal erhalten, sofern die erste Sende-Polarisation der ersten Empfangs-Polarisation und die zweite Sende-Polarisation der zweiten Empfangs-Polarisation entspricht. Die Qualität der quad-polarimetrischen Daten ist zwar geringer als bei der Verwendung von zwei kreuzpolaren Polarisationskanälen, jedoch wird die Datenmenge der SAR-Rohdatensätze reduziert.

In einer weiteren Ausführungsform umfassen die mehreren SAR-Rohdatensätze ausschließlich die folgenden Datensätze:
- den ersten SAR-Rohdatensatz, der Radarechos eines Polarisationskanals aus einem Paar von Polarisationskanälen für die gesamte erste Breite enthält, wobei das Paar von Polarisationskanälen den ersten und zweiten Polarisationskanal umfasst;
- den zweiten SAR-Rohdatensatz, der in dieser Variante die Radarechos des anderen, nicht im ersten SAR-Rohdatensatz verwendeten Polarisationskanals aus dem Paar von Polarisationskanälen für die gesamte erste Breite enthält;
- den dritten SAR-Rohdatensatz, der die Radarechos des vierten Polarisationskanals für die gesamte zweite Breite enthält.

Sofern die erste Sende-Polarisation der ersten Empfangs-Polarisation und die zweite Sende-Polarisation der zweiten Empfangs-Polarisation entspricht, werden mit dieser Variante dual-polarimetrische Daten für die gesamte erste Breite in Kombination mit quad-polarimetrischen Daten erhalten, wobei die quad-polarimetrischen Daten nur einen kreuzpolaren Polarisationskanal enthalten.

In einer weiteren Variante des erfindungsgemäßen Verfahrens enthalten die mehreren SAR-Rohdatensätze ausschließlich die folgenden Datensätze:
- den ersten SAR-Rohdatensatz, der die Radarechos eines Polarisationskanals aus einem Paar von Polarisationskanälen für die gesamte erste Breite enthält, wobei das Paar von Polarisationskanälen den ersten und zweiten Polarisationskanal umfasst;
- den zweiten SAR-Rohdatensatz, der in dieser Variante die Radarechos des dritten Polarisationskanals für die gesamte zweite Breite enthält;
- den dritten SAR-Rohdatensatz, der die Radarechos des vierten Polarisationskanals für die gesamte zweite Breite enthält;
- einen vierten SAR-Rohdatensatz, der die Radarechos des anderen, nicht im ersten SAR-Rohdatensatz verwendeten Polarisationskanals aus dem Paar von Polarisationskanälen ausschließlich für die gesamte zweite Breite enthält.

In dieser Ausführungsform ist der Polarisationskanal, der für den ersten SAR-Rohdatensatz verwendet wird, vorzugsweise der erste Polarisationskanal. Jedoch ist es auch möglich, dass der Polarisationskanal des ersten SAR-Rohdatensatzes der zweite Polarisationskanal ist. Sofern die erste Sende-Polarisation der ersten Empfangs-Polarisation und die zweite Sende-Polarisation der zweiten Empfangs-Polarisation entspricht, werden mit dieser Variante der Erfindung einfach-polarimetrische Daten für die gesamte erste Breite entweder als gleichpolare oder als kreuzpolare Daten erhalten, wohingegen quad-polarimetrische Daten unter Berücksichtigung beider kreuzpolarer Kanäle und folglich mit hoher Qualität gewonnen werden. Der obige Begriff "ausschließlich für die gesamte zweite Breite" ist dahingehend zu verstehen, dass der vierte SAR-Rohdatensatz keine Radarechos von der Erdoberfläche enthält, die nicht aus der zweiten Breite stammen. Diese Definition ist deshalb relevant, weil der Polarisationskanal, aus dem der vierte SAR-Rohdatensatz gewonnen wird, auch Radarechos aus anderen Bereichen als der zweiten Breite beinhaltet. Die soeben beschriebene Variante stellt eine besonders bevorzugte Implementierung des erfindungsgemäßen Verfahrens dar.

Die im erfindungsgemäßen Verfahren verwendete Radareinrichtung kann unterschiedlich ausgestaltet sein. In einer Variante erfolgt das Aussenden der Radarpulse und der Empfang der Radarechos mittels einer Radareinrichtung, welche eine Reflektorantenne mit einem vorzugsweise parabolischen Reflektor und einem Array aus mehreren Speise-Antennen umfasst, wobei dieses Array häufig auch als Feed-Array und die Speise-Antennen als Feeds bezeichnet werden. Alternativ oder zusätzlich kann die Radareinrichtung auch eine planare Antenne mit einem Array aus mehreren Antennenelementen umfassen. Vorzugsweise ist die Radareinrichtung entweder eine Reflektorantenne oder eine planare Antenne.

In einer weiteren bevorzugten Ausgestaltung werden die mehreren SAR-Rohdatensätze mit einer Rechnereinrichtung auf dem zumindest einen Flugobjekt ermittelt und anschließend an eine Bodenstation auf der Erdoberfläche übertragen. Mit anderen Worten erfolgt die aufwändige, weitergehende Signalprozessierung zur Gewinnung entsprechender SAR-Bilder in einer Bodenstation auf der Erdoberfläche. Hierdurch wird die Datenrate bei der Datenübertragung vom Flugobjekt zur Erdoberfläche vermindert und es wird im Flugobjekt weniger Rechenleistung benötigt.

Neben dem oben beschriebenen Verfahren betrifft die Erfindung eine Synthetik-Apertur-Radarvorrichtung zur Fernerkennung der Erdoberfläche über eine Radareinrichtung auf zumindest einem Flugobjekt, das sich in eine Azimut-Richtung über der Erdoberfläche bewegt, wobei die Radareinrichtung derart ausgestaltet ist, dass sie im Sendebetrieb Radarpulse aussendet und im Empfangsbetrieb die an der Erdoberfläche reflektierten Radarechos dieser Radarpulse empfängt. Die Synthetik-Apertur-Radarvorrichtung ist dabei derart konfiguriert, dass mit der Vorrichtung das erfindungsgemäße Verfahren bzw. eine oder mehrere bevorzugte Varianten des erfindungsgemäßen Verfahrens durchführbar sind. Mit anderen Worten wird durch die Radareinrichtung der Synthetik-Apertur-Vorrichtung der im erfindungsgemäßen Verfahren verwendete Sendebetrieb und Empfangsbetrieb realisiert und die Synthetik-Apertur-Vorrichtung beinhaltet eine geeignete Rechnereinrichtung, um die empfangenen Radarechos zu digitalisieren und mittels digitaler Strahlformung die entsprechenden SAR-Rohdatensätze zu ermitteln.

Ausführungsbeispiele der Erfindung werden nachfolgend anhand der beigefügten Figuren detailliert beschrieben.

Es zeigen:
- Fig. 1: eine schematische Darstellung, anhand der das im Rahmen der Erfindung verwendete SAR-Prinzip erläutert wird;
- Fig. 2: eine schematische Darstellung, welche das Aussenden von Radarpulsen gemäß einer Variante des erfindungsgemäßen Verfahrens verdeutlicht; und
- Fig.3: ein Diagramm, welches die Gewinnung von SAR-Rohdaten für verschiedene Varianten des erfindungsgemäßen Verfahrens verdeutlicht.

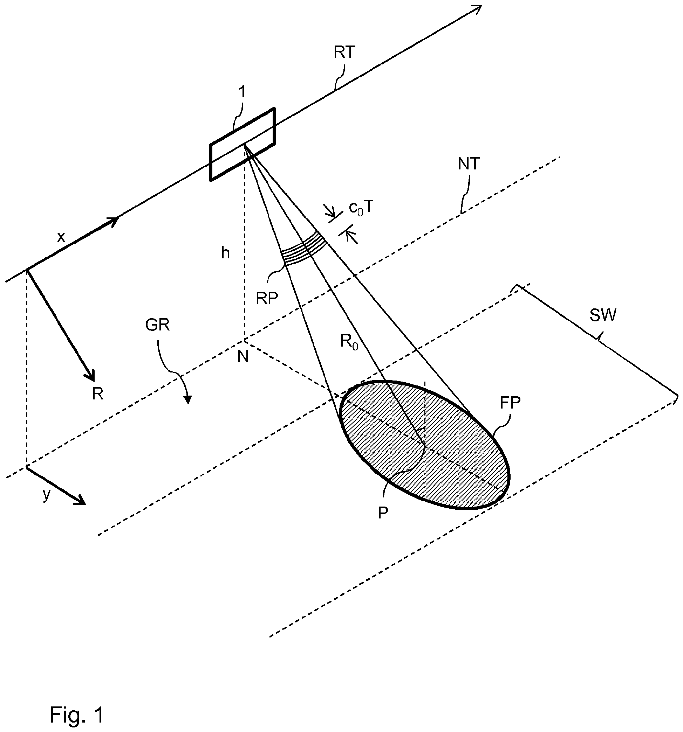

Fig. 1 zeigt in schematischer Darstellung eine SAR-Radareinrichtung 1, welche als rechteckige Apertur angedeutet ist und je nach Ausgestaltung eine oder mehrere Antennen umfasst. In dem dargestellten Szenario befindet sich die Radareinrichtung auf einem (nicht gezeigten) Satelliten, der sich in der Höhe h entlang der Radarbahn RT oberhalb der Erdoberfläche GR bewegt. Die Richtung der Radarbahn entspricht dabei der an sich bekannten Azimut-Richtung, die in Fig. 1 mit Bezugszeichen x bezeichnet ist. Anstatt die Radareinrichtung mittels eines Satelliten zu bewegen, besteht ggf. auch die Möglichkeit, hierzu ein anderes Flugobjekt zu verwenden, wie z.B. ein Flugzeug.

Die Radareinrichtung 1 sendet Radarpulse RP in aufeinander folgenden Pulswiederholintervallen mit vorgegebener Pulswiederholfrequenz in schräger Richtung auf die Erdoberfläche GR aus. Der größte Teil der Energie eines jeweiligen Radarpulses ist dabei auf die elliptische Fläche FP auf der Erdoberfläche gerichtet. Diese Fläche wird in der Regel als "Footprint" bzw. "Fußabdruck" der Radareinrichtung bzw. der zugeordneten Radarantenne bezeichnet.

Gemäß Fig. 1 weist ein jeweiliger Radarpuls RP eine vorgegebene Pulsdauer T auf, so dass der Radarpuls die räumliche Ausdehnung c₀T hat, wobei c₀ der Lichtgeschwindigkeit entspricht. Im Rahmen einer SAR-Messung werden von der Erdoberfläche zurückgestreute Radarechos der Radarpulse RP durch die Radareinrichtung 1 während ihrer Bewegung entlang der Bahn RT empfangen und erfasst. Auf diese Weise werden Informationen über die Erdoberfläche in dem Streifen SW (englisch: "swath") detektiert. Die Radareinrichtung ist dabei derart ausgestaltet, dass sie sowohl zum Aussenden von Radarpulsen als auch zum Empfang entsprechender Radarechos eingerichtet ist. Die von der Radareinrichtung erfassten Radarechos hängen von der Form und Beschaffenheit der Erdoberfläche ab und ermöglichen mit einer bekannten nachgeschalteten Signalverarbeitung die Berechnung von SAR-Bildern der Erdoberfläche.

Vor der nachgeschalteten Signalverarbeitung liegen die erfassten Radarechos nach einer Analog-Digital-Wandlung (ggf. in Kombination mit einer digitalen Strahlformung) als sog. SAR-Rohdaten vor. Im Rahmen des erfindungsgemäßen Verfahrens wird dabei ein SAR-System verwendet, bei dem die Radarpulse abwechselnd in zwei unterschiedlichen Polarisationen durch die Radareinrichtung ausgesendet werden und gleichzeitig in beiden Polarisationen durch die Radareinrichtung empfangen werden. Hieraus werden mittels digitaler Strahlformung SAR-Rohdaten für mehrere Polarisationskanäle gewonnen, wobei ein Polarisationskanal durch eine Sende-Polarisation und eine Empfangs-Polarisation gekennzeichnet ist und die in der Empfangs-Polarisation empfangenen Radarechos von in der Sende-Polarisation ausgesendeten Radarpulsen umfasst.

Die SAR-Rohdaten sind Datenabtastungen, welche die Amplitude und die Phase der abgetasteten Radarechos in den entsprechenden Polarisationskanälen enthalten. Die Rohdaten sind dabei in einer zweidimensionalen Matrix angeordnet, wobei eine Dimension der Matrix dem jeweiligen ausgesendeten Radarpuls (repräsentiert durch eine Pulsnummer) entspricht und die andere Dimension der Matrix eine Zeitverzögerung repräsentiert, welche die Zeitdauer darstellt, die ein abgetastetes Radarecho zur Ausbreitung von der Radareinrichtung zur Erdoberfläche und zurück zur Radareinrichtung 1 benötigt. Mit anderen Worten wird durch diese Zeitdauer die sog. Slant-Range (Schrägentfernung) R repräsentiert, welche dem Abstand zwischen der Radareinrichtung und dem Streupunkt des Radarechos auf der Erdoberfläche entspricht. Dieser Abstand ist somit gleichzusetzen mit einer Richtung, aus der das abgetastete Radarecho von der Erdoberfläche GR zur Radareinrichtung 1 gelangt.

In dem Szenario der Fig. 1 ist beispielhaft die Reflexion eines Radarechos an dem Streupunkt P auf der Erdoberfläche angedeutet. Die Slant-Range dieses Radarechos ist dabei mit Ro bezeichnet. Die Slant-Range steht in einer geometrischen Beziehung zu der sog. Ground-Range (Bodenentfernung), die in Fig. 1 mit y bezeichnet ist und dem Abstand zwischen der Nadir-Bahn NT und dem entsprechenden Streupunkt repräsentiert. Der Wert einer Slant-Range R kann somit eindeutig in den Wert einer entsprechenden Ground-Range y umgerechnet werden. Die Nadir-Bahn NT ist dabei die senkrechte Projektion der Radarbahn RT auf die Erdoberfläche GR. Die Position N auf der Bahn NT ist der sog. Nadir, d.h. der Punkt auf der Erdoberfläche mit dem kürzesten Abstand zur Radareinrichtung. Ein Radarecho von dem Nadir N wird als Nadir-Echo bezeichnet.

Wie bereits erwähnt, werden die SAR-Rohdaten einer nachgeschalteten Signalverarbeitung unterzogen. Je nach Ausgestaltung kann diese Signalverarbeitung bereits im Satelliten erfolgen, wobei anschließend die verarbeiteten Informationen zu einer Bodenstation auf der Erdoberfläche gesendet werden. Ebenso ist es möglich, dass die SAR-Rohdaten ohne Nachverarbeitung an eine Bodenstation übersendet werden, wobei in der Bodenstation die Nachverarbeitung durchgeführt wird, um aus den Rohdaten entsprechende SAR-Bilder zu gewinnen. Diese Nachverarbeitung ist an sich bekannt und wird deshalb nicht weiter im Detail erläutert. Im Rahmen der Nachverarbeitung wird eine Fokussierung der SAR-Rohdaten mit einer Range-Kompression und Azimut-Kompression erreicht, wodurch SAR-Bilder erhalten werden. Im Rahmen des in der Erfindung verwendeten SAR-Systems können aus den SAR-Bildern der einzelnen Polarisationskanäle bzw. ggf. aus SAR-Bildern, in denen mehrere Polarisationskanäle zusammengeführt sind, Informationen über die Streueigenschaften des erfassten Bereichs der Erdoberfläche gewonnen werden.

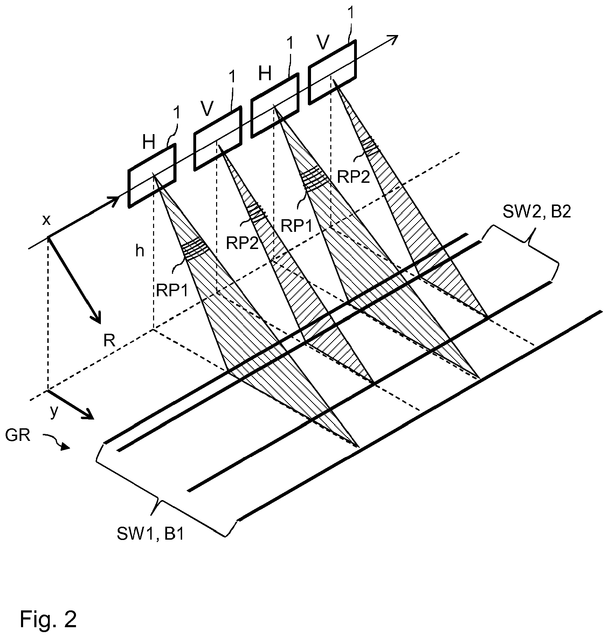

Fig. 2 zeigt in schematischer Darstellung das Aussenden von Radarpulsen mittels einer Variante des erfindungsgemäßen SAR-Systems. In Analogie zu Fig. 1 bewegt sich die Radareinrichtung 1 entlang der Azimut-Richtung x in einer Höhe h oberhalb der Erdoberfläche GR. Die entsprechende Slant-Range bzw. Ground-Range ist analog wie in Fig. 1 durch Koordinatenachsen R bzw. y angegeben. In Fig. 2 ist das Aussenden jeweiliger Radarpulse zu vier aufeinander folgenden Zeitpunkten an unterschiedlichen Azimut-Positionen der Radareinrichtung 1 gezeigt. Dabei wechselt sich das Aussenden von ersten Radarpulsen RP1 mit dem Aussenden von zweiten Radarpulsen RP2 ab. Das heißt, nach einem Aussenden eines ersten Radarpulses RP1 erfolgt immer das Aussenden eines zweiten Radarpulses RP2 und umgekehrt.

Die ersten Radarpulse RP1 werden als horizontal polarisierte Wellen ausgesendet, was durch das Bezugszeichen H in Fig. 2 verdeutlicht ist. Demgegenüber werden die zweiten Radarpulse RP2 als vertikal polarisierte Wellen ausgesendet, was durch das Bezugszeichen V in Fig. 2 verdeutlicht ist. Der Empfang der Radarechos erfolgt ebenfalls sowohl in der horizontalen Polarisation H als auch in der vertikalen Polarisation V. Die ersten und zweiten Radarpulse unterscheiden sich ferner in dem verwendeten Strahlungsdiagramm, das zu deren Aussenden genutzt wird. Die Radarpulse RP1 decken einen Streifen SW1 mit der Breite B1 auf der Erdoberfläche ab, wohingegen die zweiten Radarpulse RP2 lediglich einen Streifen SW2 mit der geringeren Breite B2 abdecken. Der Streifen SW2 liegt dabei innerhalb des Streifens SW1. Über die Radarechos aus dem Streifen SW2 wird dabei eine quad-polarimetrische Datenakquisition erreicht, bei der sowohl die ausgesendeten Radarpulse mit horizontaler Polarisation als auch die ausgesendeten Radarpulse mit vertikaler Polarisation benötigt werden. Hierdurch ergibt sich eine doppelt so hohe Pulswiederholrate im Vergleich zu Datenakquisitionen, die ausschließlich horizontal polarisierte bzw. ausschließlich vertikal polarisierte Radarpulse berücksichtigen. Demzufolge kann mit der quad-polarimetrischen Datenakquisition aufgrund von Range-Mehrdeutigkeiten nur ein schmalerer Streifen erfasst werden.

Die hier beschriebene Ausführungsform des erfindungsgemäßen Verfahrens zeichnet sich dadurch aus, dass einfach-polarimetrische Daten bzw. dual-polarimetrische Daten für einen breiten Streifen SW1 gleichzeitig mit quad-polarimetrischen Daten für einen schmaleren Streifen SW2 gewonnen werden können. Um dies zu erreichen, werden die Radarpulse als erste bzw. zweite Radarpulse RP1 bzw. RP2 mit unterschiedlichen Strahlungsdiagrammen ausgesendet und aus den Radarechos dieser Radarpulse werden mittels digitaler Strahlformung geeignete SAR-Rohdatensätze gewonnen, mit denen sowohl ein einfach-polarimetrischer bzw. dual-polarimetrischer Betriebsmodus als auch ein quad-polarimetrischer Betriebsmodus realisiert werden.

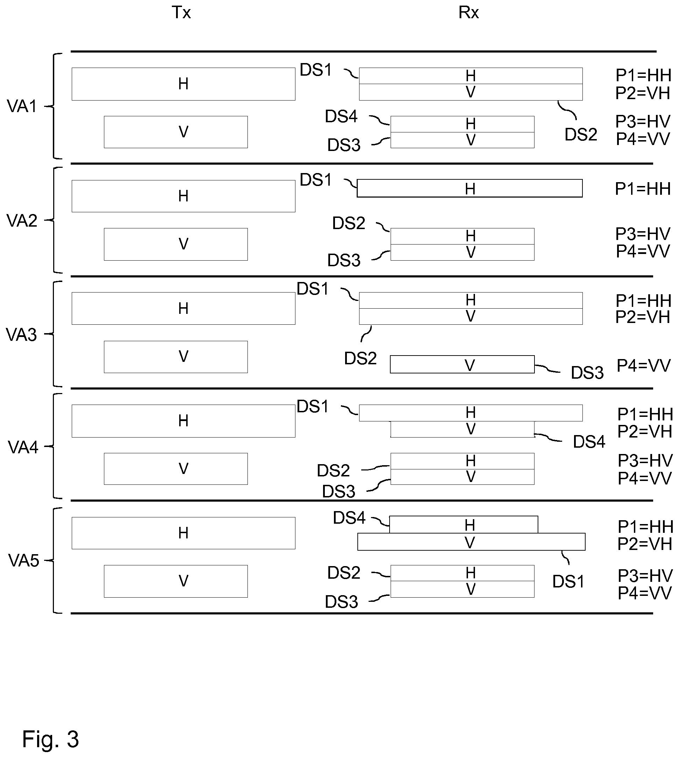

Fig. 3 zeigt ein Diagramm, welches verschiedene Varianten der Gewinnung von SAR-Rohdatensätzen zur Realisierung von zwei polarimetrischen Betriebsmodi wiedergibt. Die einzelnen Varianten sind dabei mit VA1 bis VA5 bezeichnet. Besonders bevorzugt sind dabei die Variante VA1 sowie die Variante VA4. Gemäß Fig. 3 sind für die einzelnen Varianten in der Spalte Tx die erfassten Streifenbreiten für die horizontal polarisierten Radarpulse RP1 und die vertikal polarisierten Radarpulse RP2 wiedergegeben und durch Bezugszeichen H bzw. V bezeichnet. In allen Varianten wird ein breiter Radarpuls mit horizontaler Polarisation H gefolgt von einem schmalen Radarpuls mit vertikaler Polarisation V ausgesendet. Demzufolge unterscheiden sich die Sendeschemata der einzelnen Varianten in Fig. 3 sind.

Gemäß der Spalte Rx wird in Fig. 3 verdeutlicht, zu welchen Radarechos bzw. Polarisationskanälen jeweilige SAR-Rohdatensätze für die unterschiedlichen Varianten gewonnen werden. Im Sinne von Anspruch 1 entspricht der Polarisationskanal P1 dem ersten Polarisationskanal, der Polarisationskanal P2 dem zweiten Polarisationskanal, der Polarisationskanal P3 dem dritten Polarisationskanal und der Polarisationskanal P4 dem vierten Polarisationskanal. Die neben den einzelnen Polarisationskanälen gezeigten Balken stellen dabei die Streifenbreite dar, für welche Radarechos in der entsprechenden Empfangs-Polarisation in dem betrachteten SAR-Rohdatensatz enthalten sind. Da die einzelnen Balken mit SAR-Rohdatensätzen korrelieren, wurden die Balken neben den Bezeichnungen der Empfangs-Polarisationen H bzw. V auch mit entsprechenden Bezugszeichen DS1, DS2, DS3 und DS4 zur Bezeichnung von SAR-Rohdatensätzen versehen. Im Sinne des Anspruchs 1 entspricht der Datensatz DS1 dem ersten SAR-Rohdatensatz, der Datensatz DS2 dem zweiten SAR-Rohdatensatz und der Datensatz DS3 dem dritten SAR-Rohdatensatz. Der Datensatz DS4 entspricht einem vierten SAR-Rohdatensatz, der in einigen der abhängigen Ansprüche definiert ist.

Die einzelnen Polarisationskanäle P1 bis P4 sind auch mit ihren üblichen Bezeichnungen HH, VH, HV und VV bezeichnet. HH bedeutet dabei horizontale Sende-Polarisation und horizontale Empfangs-Polarisation, VH horizontale Sende-Polarisation und vertikale Empfangs-Polarisation, HV vertikale Sende-Polarisation und horizontale Empfangs-Polarisation und VV vertikale Sende-Polarisation und vertikale Empfangs-Polarisation. Der erste Polarisationskanal P1 und der vierte Polarisationskanal P4 sind dabei kopolare Polarisationskanäle, wohingegen der zweite Polarisationskanal P2 und der dritte Polarisationskanal P3 kreuzpolare Polarisationskanäle sind.

Gemäß der Variante VA1, die der Ausführungsform des Patentanspruchs 5 entspricht, werden SAR-Rohdatensätze DS1 und DS2 für die gesamte erste Breite der beiden Polarisationskanäle P1 und P2 gewonnen. Ferner werden SAR-Rohdatensätze DS3 und DS4 für die gesamte zweite Breite der Polarisationskanäle P3 und P4 gewonnen. Auf diese Weise erhält man sowohl dual-polarimetrische Daten für die gesamte erste Breite als auch quad-polarimetrische Daten mit beiden kreuzpolaren Kanälen P2 und P3 für die gesamte zweite Breite. Es wird hierdurch ein dual-polarimetrischer Betriebsmodus mit einem quad-polarimetrischen Betriebsmodus realisiert. Der quad-polarimetrische Betriebsmodus weist eine hohe Datenqualität aufgrund der Verwendung von zwei kreuzpolaren Kanälen auf, die in der Regel geeignet zusammengeführt werden.

Gemäß der Variante VA2, die der Ausführungsform des Patentanspruchs 6 entspricht, wird ein SAR-Rohdatensatz DS1 für die gesamte erste Breite im kopolaren Polarisationskanal P1 erhalten. Es wird hierdurch ein einfach-polarimetrischer Betriebsmodus realisiert. Darüber hinaus wird ein quad-polarimetrischer Betriebsmodus für die zweite Breite realisiert, der nur einen kreuzpolaren Polarisationskanal P3 umfasst. Diese quad-polarimetrische Datenakquisition hat gegenüber der Verwendung von zwei kreuzpolaren Polarisationskanälen eine geringere Qualität, jedoch werden hierfür auch weniger SAR-Rohdaten benötigt, wodurch die Menge von an eine Bodenstation zu übermittelnden Daten vermindert werden kann.

Gemäß der Variante VA3, die der Ausführungsform gemäß Patentanspruch 7 entspricht, wird ein dual-polarimetrischer Betriebsmodus durch Berücksichtigung der beiden Polarisationskanäle P1 und P2 für die gesamte erste Breite realisiert. Ferner wird ein quad-polarimetrischer Betriebsmodus mit nur einem kreuzpolaren Polarisationskanal P2 für die gesamte zweite Breite realisiert.

Gemäß der Variante VA4, die der Ausführungsform gemäß Patentanspruch 8 entspricht, wird ein einfach-polarimetrischer Betriebsmodus mit dem kopolaren Polarisationskanal P1 für die gesamte erste Breite in Kombination mit einem quad-polarimetrischen Betriebsmodus mit vier Polarisationskanälen für die gesamte zweite Breite realisiert.

Gemäß der Variante VA5, die ebenfalls der Ausführungsform gemäß Patentanspruch 8 entspricht, wird analog zur Variante VA4 wiederum ein einfach-polarimetrischer Betriebsmodus in Kombination mit einem quad-polarimetrischen Betriebsmodus mit vier Polarisationskanälen realisiert. Im Unterschied zur Variante VA4 enthält der einfach-polarimetrische Betriebsmodus nunmehr jedoch den kreuzpolaren Polarisationskanal P2.

Die Erfinder haben unter anderem die Variante VA4 der Fig. 3 basierend auf Daten eines bekannten SAR-Systems simuliert. Dieses System basiert auf der geplanten Tandem-L-Mission und verwendet eine Reflektorantenne mit einer Vielzahl von Feeds. Die Radarpulse werden mit variabler Pulswiederholrate ausgesendet. Für die einfach-polarimetrischen und quad-polarimetrischen Datenakquisitionen, die sich aus den SAR-Rohdatensätzen der Variante VA4 ergeben, wurde das sog. ASR-Verhältnis (Ambiguity-to-Signal Ratio) ermittelt, welches ein Maß für die Azimutund Range-Mehrdeutigkeiten ist. Die Qualität eines SAR-Bildes ist umso besser, je kleiner dieses Verhältnis ist. Das ermittelte ASR-Verhältnis wurde mit Daten verglichen, die in einem separaten einfach-polarimetrischen Betriebsmodus und einem separaten quad-polarimetrischen Betriebsmodus mit dem SAR-System gewonnen wurden. Es konnte nachgewiesen werden, dass das ASR-Verhältnis bei gleichzeitiger einfach-polarimetrischer und quad-polarimetrischer Datenakquisition nur unwesentlich schlechter als das entsprechende ASR-Verhältnis bei einer separaten einfach-polarimetrischen und quad-polarimetrischen Datenakquisition ist.

Die im Vorangegangenen beschriebenen Ausführungsformen der Erfindung weisen eine Reihe von Vorteilen auf. Insbesondere wird erstmalig ein Synthetik-Apertur-Radarverfahren geschaffen, bei dem einfach- bzw. dual-polarimetrische Daten gemeinsam mit polarimetrischen Daten aus drei oder vier Polarisationskanälen erfasst werden. Dabei ermöglicht die einfach- bzw. dual-polarimetrische Datenakquisition die Erfassung eines Streifens mit größerer Breite auf der Erdoberfläche als die polarimetrische Datenakquisition aus drei oder vier Polarisationskanälen. Um dies zu erreichen, werden Radarpulse in einer ersten Sende-Polarisation mit einem Antennendiagramm mit größerer Breite in Range-Richtung als Radarpulse in einer zweiten Sende-Polarisation ausgesendet. Die aus den Radarechos gewonnenen SAR-Rohdaten sind im Rahmen der Erfindung immer derart gewählt, dass neben einfach- bzw. dual-polarimetrischen Daten für den breiten Streifen auch immer polarimetrische Daten aus drei oder vier Polarisationskanälen für den schmaleren Streifen erhalten werden.

## Patentansprüche

1. Synthetik-Apertur-Radarverfahren zur Fernerkundung der Erdoberfläche (GR) über eine Radareinrichtung (1) auf zumindest einem Flugobjekt, das sich in eine Azimut-Richtung (x) über der Erdoberfläche (GR) bewegt, wobei die Radareinrichtung (1) im Sendebetrieb Radarpulse (RP1, RP2) aussendet und im Empfangsbetrieb die an der Erdoberfläche (GR) reflektierten Radarechos dieser Radarpulse (RP1, RP2) empfängt, wobei
- im Sendebetrieb zu aufeinander folgenden Sendezeitpunkten abwechselnd erste und zweite Radarpulse (RP1, RP2) durch die Radareinrichtung (1) ausgesendet werden, wobei ein jeweiliger erster Radarpuls (RP1) eine erste Sende-Polarisation (H) aufweist und mit einem Strahlungsdiagramm ausgesendet wird, das eine erste Breite (B1) auf der Erdoberfläche (GR) in Range-Richtung (y) senkrecht zur Azimut-Richtung (x) abdeckt, und wobei ein jeweiliger zweiter Radarpuls (RP2) eine zweite Sende-Polarisation (V) aufweist, welche unterschiedlich zur ersten Sende-Polarisation (H) ist, und mit einem Strahlungsdiagramm ausgesendet wird, das eine zweite Breite (B2) auf der Erdoberfläche (GR) in der Range-Richtung (y) abdeckt, wobei die erste Breite (B1) einem ersten Streifen (SW1) in Azimut-Richtung (x) auf der Erdoberfläche (GR) entspricht und die zweite Breite (B2) einem zweiten Streifen (SW2) in Azimut-Richtung (x) auf der Erdoberfläche (GR) entspricht, wobei der erste Streifen (SW1) den gesamten zweiten Streifen (SW2) enthält und die zweite Breite (B2) kleiner als die erste Breite ist (B1);
- im Empfangsbetrieb in einer ersten Empfangs-Polarisation (H) und in einer zweiten Empfangs-Polarisation (V) die Radarechos der ersten und zweiten Radarpulse (RP1, RP2) durch die Radareinrichtung (1) empfangen werden, wodurch ein erster bis vierter Polarisationskanal (P1, P2, P3, P4) gebildet werden, wobei der erste Polarisationskanal (P1) die in der ersten Empfangs-Polarisation (H) empfangenen Radarechos der ersten Radarpulse (RP1) enthält, der zweite Polarisationskanal (P2) die in der zweiten Empfangs-Polarisation (V) empfangenen Radarechos der ersten Radarpulse (RP1) enthält, der dritte Polarisationskanal (P3) die in der ersten Empfangs-Polarisation (H) empfangenen Radarechos der zweiten Radarpulse (RP2) enthält und der vierte Polarisationskanal (P4) die in der zweiten Empfangs-Polarisation (V) empfangenen Radarechos der zweiten Radarpulse (RP2) enthält;
- die empfangenen Radarechos digitalisiert werden und mittels digitaler Strahlformung aus den empfangenen Radarechos mehrere SAR-Rohdatensätze (DS1, DS2, DS3, DS4) ermittelt werden, welche zumindest umfassen:
i) einen ersten SAR-Rohdatensatz (DS1), der Radarechos eines Polarisationskanals (P1, P2) aus einem Paar von Polarisationskanälen (P1, P2) für die gesamte erste Breite (B1) enthält, wobei das Paar von Polarisationskanälen (P1, P2) den ersten und zweiten Polarisationskanal (P1, P2) umfasst;
ii) einen zweiten SAR-Rohdatensatz (DS2), der entweder die Radarechos des anderen, nicht im ersten SAR-Rohdatensatz (DS1) verwendeten Polarisationskanals (P1, P2) aus dem Paar von Polarisationskanälen (P1, P2) für die gesamte erste Breite (B1) enthält oder der die Radarechos des dritten Polarisationskanals (P3) für die gesamte zweite Breite (B2) enthält;
iii) einen dritten SAR-Rohdatensatz, der die Radarechos des vierten Polarisationskanals (P4) für die gesamte zweite Breite (B2) enthält.

2. Verfahren nach Anspruch 1, **dadurch gekennzeichnet, dass** die erste Sende-Polarisation (H) der ersten Empfangs-Polarisation (H) und die zweite Sende-Polarisation (V) der zweiten Empfangs-Polarisation (V) entspricht.

3. Verfahren nach Anspruch 1 oder 2, **dadurch gekennzeichnet, dass** die erste Sende-Polarisation (H) und die zweite Sende-Polarisation (V) sowie die erste Empfangs-Polarisation (H) und die zweite Empfangs-Polarisation (V) lineare Polarisationen sind, wobei die erste Sende-Polarisation (H) und die erste Empfangs-Polarisation vorzugsweise eine horizontale Polarisation sind und die zweite Sende-Polarisation (V) und die zweite Empfangs-Polarisation (V) vorzugsweise eine vertikale Polarisation sind.

4. Verfahren nach einem der vorhergehenden Ansprüche, **dadurch gekennzeichnet, dass** die Pulswiederholrate der ersten Radarpulse (RP1) und/oder der zweiten Radarpulse variiert wird.

5. Verfahren nach einem der vorhergehenden Ansprüche, **dadurch gekennzeichnet, dass** die mehreren SAR-Rohdatensätze (DS1, DS2, DS3, DS4) ausschließlich umfassen:
- den ersten SAR-Rohdatensatz (DS1), der Radarechos eines Polarisationskanals (P1, P2) aus einem Paar von Polarisationskanälen (P1, P2) für die gesamte erste Breite (B1) enthält, wobei das Paar von Polarisationskanälen (P1, P2) den ersten und zweiten Polarisationskanal (P1, P2) umfasst;
- den zweiten SAR-Rohdatensatz (DS2), der die Radarechos des anderen, nicht im ersten SAR-Rohdatensatz (DS1) verwendeten Polarisationskanals (P1, P2) aus dem Paar von Polarisationskanälen (P1, P2) für die gesamte erste Breite (B1) enthält;
- den dritten SAR-Rohdatensatz (DS3), der die Radarechos des vierten Polarisationskanals (P4) für die gesamte zweite Breite (B2) enthält;
- einen vierten SAR-Rohdatensatz, der die Radarechos des dritten Polarisationskanals (P3) für die gesamte zweite Breite (B2) enthält.

6. Verfahren nach einem der Ansprüche 1 bis 4, **dadurch gekennzeichnet, dass** die mehreren SAR-Rohdatensätze (DS1, DS2, DS3, DS4) ausschließlich umfassen:
- den ersten SAR-Rohdatensatz (DS1), der Radarechos eines Polarisationskanals (P1, P2) aus einem Paar von Polarisationskanälen (P1, P2) für die gesamte erste Breite (B1) enthält, wobei das Paar von Polarisationskanälen (P1, P2) den ersten und zweiten Polarisationskanal (P1, P2) umfasst;
- den zweiten SAR-Rohdatensatz (DS2), der die Radarechos des dritten Polarisationskanals (P3) für die gesamte zweite Breite (B2) enthält;
- den dritten SAR-Rohdatensatz (DS3), der die Radarechos des vierten Polarisationskanals (P4) für die gesamte zweite Breite (B2) enthält.

7. Verfahren nach einem der Ansprüche 1 bis 4, **dadurch gekennzeichnet, dass** die mehreren SAR-Rohdatensätze (DS1, DS2, DS3, DS4) ausschließlich umfassen:
- den ersten SAR-Rohdatensatz (DS1), der Radarechos eines Polarisationskanals (P1, P2) aus einem Paar von Polarisationskanälen (P1, P2) für die gesamte erste Breite (B1) enthält, wobei das Paar von Polarisationskanälen (P1, P2) den ersten und zweiten Polarisationskanal (P1, P2) umfasst;
- den zweiten SAR-Rohdatensatz (DS2), der die Radarechos des anderen, nicht im ersten SAR-Rohdatensatz (DS1) verwendeten Polarisationskanals (P1, P2) aus dem Paar von Polarisationskanälen (P1, P2) für die gesamte erste Breite (B1) enthält;
- den dritten SAR-Rohdatensatz (DS3), der die Radarechos des vierten Polarisationskanals (P4) für die gesamte zweite Breite (B2) enthält.

8. Verfahren nach einem der Ansprüche 1 bis 4, **dadurch gekennzeichnet, dass** die mehreren SAR-Rohdatensätze (DS1, DS2, DS3, DS4) ausschließlich umfassen:
- den ersten SAR-Rohdatensatz (DS1), der Radarechos eines Polarisationskanals (P1, P2) aus einem Paar von Polarisationskanälen (P1, P2) für die gesamte erste Breite (B1) enthält, wobei das Paar von Polarisationskanälen (P1, P2) den ersten und zweiten Polarisationskanal (P1, P2) umfasst;
- den zweiten SAR-Rohdatensatz (DS2), der die Radarechos des dritten Polarisationskanals (P3) für die gesamte zweite Breite (B2) enthält;
- den dritten SAR-Rohdatensatz (DS3), der die Radarechos des vierten Polarisationskanals (P4) für die gesamte zweite Breite (B2) enthält;
- einen vierten SAR-Rohdatensatz (DS1), der die Radarechos des anderen, nicht im ersten SAR-Rohdatensatz (DS1) verwendeten Polarisationskanals (P1, P2) aus dem Paar von Polarisationskanälen (P1, P2) ausschließlich für die gesamte zweite Breite (B2) enthält.

9. Verfahren nach einem der vorhergehenden Ansprüche, **dadurch gekennzeichnet, dass** das Aussenden der Radarpulse (RP1, RP2) und der Empfang der Radarechos mittels einer Radareinrichtung (1) erfolgt, welche eine Reflektorantenne mit einem Reflektor und einem Array aus mehreren Speise-Antennen und/oder eine planare Antenne mit einem Array aus mehreren Antennenelementen umfasst.

10. Verfahren nach einem der vorhergehenden Ansprüche, **dadurch gekennzeichnet, dass** die mehreren SAR-Rohdatensätze (DS1, DS2, DS3, DS4) mit einer Rechnereinrichtung auf dem zumindest einen Flugobjekt ermittelt werden und anschließend an eine Bodenstation auf der Erdoberfläche (GR) übertragen werden.

11. Synthetik-Apertur-Radarvorrichtung zur Fernerkundung der Erdoberfläche (GR) über eine Radareinrichtung (1) auf zumindest einem Flugobjekt, das sich in eine Azimut-Richtung (x) über der Erdoberfläche (GR) bewegt, wobei die Radareinrichtung (1) derart ausgestaltet ist, dass sie im Sendebetrieb Radarpulse aussendet und im Empfangsbetrieb die an der Erdoberfläche (GR) reflektierten Radarechos dieser Radarpulse (RP) empfängt, wobei die Synthetik-Apertur-Radarvorrichtung derart konfiguriert ist, dass
- im Sendebetrieb zu aufeinander folgenden Sendezeitpunkten abwechselnd erste und zweite Radarpulse (RP1, RP2) durch die Radareinrichtung (1) ausgesendet werden, wobei ein jeweiliger erster Radarpuls (RP1) eine erste Sende-Polarisation (H) aufweist und mit einem Strahlungsdiagramm ausgesendet wird, das eine erste Breite (B1) auf der Erdoberfläche (GR) in Range-Richtung (y) senkrecht zur Azimut-Richtung (x) abdeckt, und wobei ein jeweiliger zweiter Radarpuls (RP2) eine zweite Sende-Polarisation (V) aufweist, welche unterschiedlich zur ersten Sende-Polarisation (H) ist, und mit einem Strahlungsdiagramm ausgesendet wird, das eine zweite Breite (B2) auf der Erdoberfläche (GR) in der Range-Richtung (y) abdeckt, wobei die erste Breite einem ersten Streifen (SW1) in Azimut-Richtung (x) auf der Erdoberfläche (GR) entspricht und die zweite Breite (B2) einem zweiten Streifen (SW2) in Azimut-Richtung (x) auf der Erdoberfläche (GR) entspricht, wobei der erste Streifen (SW1) den gesamten zweiten Streifen (SW2) enthält und die zweite Breite (B2) kleiner als die erste Breite ist (B1);
- im Empfangsbetrieb sowohl in einer ersten Empfangs-Polarisation (H) und in einer zweiten Empfangs-Polarisation (V) die Radarechos der ersten und zweiten Radarpulse (RP1, RP2) durch die Radareinrichtung (1) empfangen werden, wodurch ein erster bis vierter Polarisationskanal (P1, P2, P3, P4) gebildet werden, wobei der erste Polarisationskanal (P1) die in der ersten Empfangs-Polarisation (H) empfangenen Radarechos der ersten Radarpulse (RP1) enthält, der zweite Polarisationskanal (P2) die in der zweiten Empfangs-Polarisation (V) empfangenen Radarechos der ersten Radarpulse (RP1) enthält, der dritte Polarisationskanal (P3) die in der ersten Empfangs-Polarisation (H) empfangenen Radarechos der zweiten Radarpulse (RP2) enthält und der vierte Polarisationskanal (P4) die in der zweiten Empfangs-Polarisation (V) empfangenen Radarechos der zweiten Radarpulse (RP2) enthält;
- die empfangenen Radarechos digitalisiert werden und mittels digitaler Strahlformung aus den empfangenen Radarechos mehrere SAR-Rohdatensätze (DS1, D12, ..., DS4) ermittelt werden, welche zumindest umfassen:
i) einen ersten SAR-Rohdatensatz (DS1), der Radarechos eines Polarisationskanals (P1, P2) aus einem Paar von Polarisationskanälen (P1, P2) für die gesamte erste Breite (B1) enthält, wobei das Paar von Polarisationskanälen (P1, P2) den ersten und zweiten Polarisationskanal (P1, P2) umfasst;
ii) einen zweiten SAR-Rohdatensatz (DS2), der entweder die Radarechos des anderen, nicht im ersten SAR-Rohdatensatz (DS1) verwendeten Polarisationskanals (P1, P2) aus dem Paar von Polarisationskanälen (P1, P2) für die gesamte erste Breite (B1) enthält oder der die Radarechos des dritten Polarisationskanals (P3) für die gesamte zweite Breite (B2) enthält;
iii) einen dritten SAR-Rohdatensatz, der die Radarechos des vierten Polarisationskanals (P4) für die gesamte zweite Breite (B2) enthält.

12. Vorrichtung nach Anspruch 11, **dadurch gekennzeichnet, dass** die Vorrichtung zur Durchführung eines Verfahrens nach einem der Ansprüche 2 bis 10 eingerichtet ist.

## Claims

1. A synthetic aperture radar method for remote sensing of the earth's surface (GR) by means of a radar device (1) on at least one flying object moving in an azimuth direction (x) above the earth's surface (GR), the radar device (1) transmitting radar pulses (RP1, RP2) in transmit mode and receiving the radar echoes of these radar pulses (RP1, RP2) reflected at the earth's surface (GR) in receive mode, wherein
- in transmit mode, first and second radar pulses (RP1, RP2) are transmitted alternately by the radar device (1) at successive transmission times, wherein a respective first radar pulse (RP1) has a first transmit polarization (H) and is transmitted with a radiation pattern which covers a first width (B1) on the earth's surface (GR) in the range direction (y) perpendicular to the azimuth direction (x), and wherein a respective second radar pulse (RP2) has a second transmit polarization (V) which is different from the first transmit polarization (H) and is transmitted with a radiation pattern covering a second width (B2) on the earth's surface (GR) in the range direction (y), the first width (B1) corresponding to a first swath (SW1) in the azimuth direction (x) on the earth's surface (GR) and the second width (B2) corresponding to a second swath (SW2) in the azimuth direction (x) on the earth's surface (GR), the first swath (SW1) containing the entire second swath (SW2) and the second width (B2) being smaller than the first width (B 1);
- in receive mode, in a first receive polarization (H) and in a second receive polarization (V), the radar echoes of the first and second radar pulses (RP1, RP2) are received by the radar device (1), thereby forming first to fourth polarization channels (P1, P2, P3, P4), where the first polarization channel (P1) contains the radar echoes of the first radar pulses (RP1) received in the first receive polarization (H), the second polarization channel (P2) contains the radar echoes of the first radar pulses (RP1) received in the second receive polarization (V), the third polarization channel (P3) contains the radar echoes of the second radar pulses (RP2) received in the first receive polarization (H), and the fourth polarization channel (P4) contains the radar echoes of the second radar pulses (RP2) received in the second receive polarization (V);
- the received radar echoes are digitized and, by means of digital beamforming, a plurality of SAR raw data sets (DS1, DS2, DS3, DS4) is determined from the received radar echoes, the SAR raw data sets comprise at least:
i) a first SAR raw data set (DS1) containing radar echoes of a polarization channel (P1, P2) from a pair of polarization channels (P1, P2) for the entire first width (B1), the pair of polarization channels (P1, P2) comprising the first and second polarization channels (P1, P2);
ii) a second SAR raw data set (DS2) containing either the radar echoes of the other polarization channel (P1, P2) not used in the first SAR raw data set (DS1) from the pair of polarization channels (P1, P2) for the entire first width (B1) or containing the radar echoes of the third polarization channel (P3) for the entire second width (B2);
iii) a third SAR raw data set containing the radar echoes of the fourth polarization channel (P4) for the entire second width (B2).

2. The method according to claim 1, **characterized in that** the first transmit polarization (H) corresponds to the first receive polarization (H) and the second transmit polarization (V) corresponds to the second receive polarization (V).

3. The method according to claim 1 or 2, **characterized in that** the first transmit polarization (H) and the second transmit polarization (V) as well as the first receive polarization (H) and the second receive polarization (V) are linear polarizations, wherein the first transmit polarization (H) and the first receive polarization are preferably a horizontal polarization and the second transmit polarization (V) and the second receive polarization (V) are preferably a vertical polarization.

4. The method according to one of the preceding claims, **characterized in that** the pulse repetition rate of the first radar pulses (RP1) and/or of the second radar pulses is varied.

5. The method according to one of the preceding claims, **characterized in that** the plurality of SAR raw data sets (DS1, DS2, DS3, DS4) exclusively comprises:
- the first SAR raw data set (DS1) containing radar echoes of a polarization channel (P1, P2) from a pair of polarization channels (P1, P2) for the entire first width (B1), the pair of polarization channels (P1, P2) comprising the first and second polarization channels (P1, P2);
- the second SAR raw data set (DS2) containing the radar echoes of the other polarization channel (P1, P2) not used in the first SAR raw data set (DS1) from the pair of polarization channels (P1, P2) for the entire first width (B1);
- the third SAR raw data set (DS3) containing the radar echoes of the fourth polarization channel (P4) for the entire second width (B2);
- a fourth SAR raw data set containing the radar echoes of the third polarization channel (P3) for the entire second width (B2).

6. The method according to one of claims 1 to 4, **characterized in that** the plurality of SAR raw data sets (DS1, DS2, DS3, DS4) exclusively comprises:
- the first SAR raw data set (DS1) containing radar echoes of a polarization channel (P1, P2) from a pair of polarization channels (P1, P2) for the entire first width (B1), the pair of polarization channels (P1, P2) comprising the first and second polarization channels (P1, P2);
- the second SAR raw data set (DS2) containing the radar echoes of the third polarization channel (P3) for the entire second width (B2);
- the third SAR raw data set (DS3) containing the radar echoes of the fourth polarization channel (P4) for the entire second width (B2).

7. The method according to one of claims 1 to 4, **characterized in that** the plurality of SAR raw data sets (DS1, DS2, DS3, DS4) exclusively comprises:
- the first SAR raw data set (DS1) containing radar echoes of a polarization channel (P1, P2) from a pair of polarization channels (P1, P2) for the entire first width (B1), the pair of polarization channels (P1, P2) comprising the first and second polarization channels (P1, P2);
- the second SAR raw data set (DS2) containing the radar echoes of the other polarization channel (P1, P2) not used in the first SAR raw data set (DS1) from the pair of polarization channels (P1, P2) for the entire first width (B1);
- the third SAR raw data set (DS3) containing the radar echoes of the fourth polarization channel (P4) for the entire second width (B2).

8. The method according to one of claims 1 to 4, **characterized in that** the plurality of SAR raw data sets (DS1, DS2, DS3, DS4) exclusively comprises:
- the first SAR raw data set (DS1) containing radar echoes of a polarization channel (P1, P2) from a pair of polarization channels (P1, P2) for the entire first width (B1), the pair of polarization channels (P1, P2) comprising the first and second polarization channels (P1, P2);
- the second SAR raw data set (DS2) containing the radar echoes of the third polarization channel (P3) for the whole second width (B2);
- the third SAR raw data set (DS3) containing the radar echoes of the fourth polarization channel (P4) for the entire second width (B2);
- a fourth SAR raw data set (DS1) containing the radar echoes of the other polarization channel (P1, P2) not used in the first SAR raw data set (DS1) from the pair of polarization channels (P1, P2) exclusively for the entire second width (B2).

9. The method according to one of the preceding claims, **characterized in that** the transmission of the radar pulses (RP1, RP2) and the reception of the radar echoes is performed by means of a radar device (1) comprising a reflector antenna with a reflector and an array of several feed antennas and/or a planar antenna with an array of several antenna elements.

10. The method according to one of the preceding claims, **characterized in that** the plurality of SAR raw data sets (DS1, DS2, DS3, DS4) is determined by a computer device on the at least one flying object and is thereafter transmitted to a ground station on the earth's surface (GR).

11. A synthetic aperture radar apparatus for remote sensing of the earth's surface (GR) by means of a radar device (1) on at least one flying object moving in an azimuth direction (x) above the earth's surface (GR), the radar device (1) being configured such that it transmits radar pulses in transmit mode and receives the radar echoes of these radar pulses (RP) reflected at the earth's surface (GR) in receive mode, wherein the synthetic aperture radar apparatus is configured such that
- in transmit mode, first and second radar pulses (RP1, RP2) are transmitted alternately by the radar device (1) at successive transmission times, wherein a respective first radar pulse (RP1) has a first transmit polarization (H) and is transmitted with a radiation pattern which covers a first width (B1) on the earth's surface (GR) in the range direction (y) perpendicular to the azimuth direction (x), and wherein a respective second radar pulse (RP2) has a second transmit polarization (V) which is different from the first transmit polarization (H) and is transmitted with a radiation pattern covering a second width (B2) on the earth's surface (GR) in the range direction (y), the first width (B1) corresponding to a first swath (SW1) in the azimuth direction (x) on the earth's surface (GR) and the second width (B2) corresponding to a second swath (SW2) in the azimuth direction (x) on the earth's surface (GR), the first swath (SW1) containing the entire second swath (SW2) and the second width (B2) being smaller than the first width (B1);
- in receive mode, both in a first receive polarization (H) and in a second receive polarization (V), the radar echoes of the first and second radar pulses (RP1, RP2) are received by the radar device (1), thereby forming first to fourth polarization channels (P1, P2, P3, P4), where the first polarization channel (P1) contains the radar echoes of the first radar pulses (RP1) received in the first receive polarization (H), the second polarization channel (P2) contains the radar echoes of the first radar pulses (RP1) received in the second receive polarization (V), the third polarization channel (P3) contains the radar echoes of the second radar pulses (RP2) received in the first receive polarization (H), and the fourth polarization channel (P4) contains the radar echoes of the second radar pulses (RP2) received in the second receive polarization (V);
- the received radar echoes are digitized and, by means of digital beamforming, a plurality of SAR raw data sets (DS1, DS2, DS3, DS4) is determined from the received radar echoes, the SAR raw data sets comprise at least:
i) a first SAR raw data set (DS1) containing radar echoes of a polarization channel (P1, P2) from a pair of polarization channels (P1, P2) for the entire first width (B1), the pair of polarization channels (P1, P2) comprising the first and second polarization channels (P1, P2);
ii) a second SAR raw data set (DS2) containing either the radar echoes of the other polarization channel (P1, P2) not used in the first SAR raw data set (DS1) from the pair of polarization channels (P1, P2) for the entire first width (B1) or containing the radar echoes of the third polarization channel (P3) for the entire second width (B2);
iii) a third SAR raw data set containing the radar echoes of the fourth polarization channel (P4) for the entire second width (B2).

12. The apparatus according to claim 11, **characterized in that** the apparatus is configured for performing a method according to one of claims 2 to 10.

## Revendications

1. Procédé de radar à synthèse d'ouverture pour la télédétection de la surface terrestre (GR) par le biais d'une installation radar (1) sur au moins un objet volant qui se déplace dans une direction azimutale (x) au-dessus de la surface terrestre (GR), dans lequel l'installation radar (1) émet dans le mode d'émission des impulsions radar (RP1, RP2) et reçoit dans le mode de réception les échos radar de ces impulsions radar (RP1, RP2) réfléchis sur la surface terrestre (GR), dans lequel
- des premières et secondes impulsions radar (RP1, RP2) sont émises en alternance par l'installation radar (1) dans le mode d'émission à des instants d'émission successifs, dans lequel une première impulsion radar respective (RP1) présente une première polarisation d'émission (H) et est émise avec un diagramme de rayonnement qui couvre une première largeur (B1) sur la surface terrestre (GR) dans une direction de portée (y) perpendiculaire à la direction azimutale (x), et dans lequel une seconde impulsion radar respective (RP2) présente une seconde polarisation d'émission (V) qui est différente de la première polarisation d'émission (H), et est émise avec un diagramme de rayonnement qui couvre une seconde largeur (B2) sur la surface terrestre (GR) dans la direction de portée (y), dans lequel la première largeur (B1) correspond à un premier couloir (SW1) dans la direction azimutale (x) sur la surface terrestre (GR) et la seconde largeur (B2) correspond à un second couloir (SW2) dans la direction azimutale (x) sur la surface terrestre (GR), dans lequel le premier couloir (SW1) contient le second couloir entier (SW2) et la seconde largeur (B2) est inférieure à la première largeur (B1) ;
- les échos radar des premières et secondes impulsions radar (RP1, RP2) sont reçus par l'installation radar (1) dans le mode de réception dans une première polarisation de réception (H) et dans une seconde polarisation de réception (V), moyennant quoi des premier à quatrième canaux de polarisation (P1, P2, P3, P4) sont formés, dans lequel le premier canal de polarisation (P1) contient les échos radar des premières impulsions radar (RP1) reçus dans la première polarisation de réception (H), le deuxième canal de polarisation (P2) contient les échos radar des premières impulsions radar (RP1) reçus dans la seconde polarisation de réception (V), le troisième canal de polarisation (P3) contient les échos radar des secondes impulsions radar (RP2) reçus dans la première polarisation de réception (H) et le quatrième canal de polarisation (P4) contient les échos radar des secondes impulsions radar (RP2) reçus dans la seconde polarisation de réception (V) ;
- les échos radar reçus sont numérisés et plusieurs ensembles de données brutes de RSO (DS1, DS2, DS3, DS4) sont déterminés au moyen de formation de faisceau numérique à partir des échos radar reçus, lesquels comprennent au moins :
i) un premier ensemble de données brutes de RSO (DS1) qui contient des échos radar d'un canal de polarisation (P1, P2) parmi une paire de canaux de polarisation (P1, P2) pour la première largeur entière (B1), dans lequel la paire de canaux de polarisation (P1, P2) comprend les premier et deuxième canaux de polarisation (P1, P2) ;
ii) un deuxième ensemble de données brutes de RSO (DS2) qui contient soit les échos radar de l'autre canal de polarisation (P1, P2), non utilisé dans le premier ensemble de données brutes de RSO (DS1), parmi la paire de canaux de polarisation (P1, P2) pour la première largeur entière (B1), soit qui contient les échos radar du troisième canal de polarisation (P3) pour la seconde largeur entière (B2) ;
iii) un troisième ensemble de données brutes de RSO qui contient les échos radar du quatrième canal de polarisation (P4) pour la seconde largeur entière (B2).

2. Procédé selon la revendication 1, **caractérisé en ce que** la première polarisation d'émission (H) correspond à la première polarisation de réception (H) et la seconde polarisation d'émission (V) correspond à la seconde polarisation de réception (V).

3. Procédé selon la revendication 1 ou 2, **caractérisé en ce que** la première polarisation d'émission (H) et la seconde polarisation d'émission (V) ainsi que la première polarisation de réception (H) et la seconde polarisation de réception (V) sont des polarisations linéaires, dans lequel la première polarisation d'émission (H) et la première polarisation de réception sont de préférence une polarisation horizontale, et la seconde polarisation d'émission (V) et la seconde polarisation de réception (V) sont de préférence une polarisation verticale.

4. Procédé selon une des revendications précédentes, **caractérisé en ce que** la fréquence de répétition des impulsions des premières impulsions radar (RP1) et/ou des secondes impulsions radar varie.

5. Procédé selon une des revendications précédentes, **caractérisé en ce que** la pluralité d'ensembles de données brutes de RSO (DS1, DS2, DS3, DS4) comprend exclusivement :
- le premier ensemble de données brutes de RSO (DS1) qui contient des échos radar d'un canal de polarisation (P1, P2) parmi une paire de canaux de polarisation (P1, P2) pour la première largeur entière (B1), dans lequel la paire de canaux de polarisation (P1, P2) comprend les premier et deuxième canaux de polarisation (P1, P2) ;
- le deuxième ensemble de données brutes de RSO (DS2) qui contient les échos radar de l'autre canal de polarisation (P1, P2), non utilisé dans le premier ensemble de données brutes de RSO (DS1), parmi la paire de canaux de polarisation (P1, P2) pour la première largeur entière (B1) ;
- le troisième ensemble de données brutes de RSO (DS3) qui contient les échos radar du quatrième canal de polarisation (P4) pour la seconde largeur entière (B2) ;
- un quatrième ensemble de données brutes de RSO qui contient les échos radar du troisième canal de polarisation (P3) pour la seconde largeur entière (B2).

6. Procédé selon une des revendications 1 à 4, **caractérisé en ce que** la pluralité d'ensembles de données brutes de RSO (DS1, DS2, DS3, DS4) comprend exclusivement :
- le premier ensemble de données brutes de RSO (DS1) qui contient des échos radar d'un canal de polarisation (P1, P2) parmi une paire de canaux de polarisation (P1, P2) pour la première largeur entière (B1), dans lequel la paire de canaux de polarisation (P1, P2) comprend les premier et deuxième canaux de polarisation (P1, P2) ;
- le deuxième ensemble de données brutes de RSO (DS2) qui contient les échos radar du troisième canal de polarisation (P3) pour la seconde largeur entière (B2) ;
- le troisième ensemble de données brutes de RSO (DS3) qui contient les échos radar du quatrième canal de polarisation (P4) pour la seconde largeur entière (B2).

7. Procédé selon une des revendications 1 à 4, **caractérisé en ce que** la pluralité d'ensembles de données brutes de RSO (DS1, DS2, DS3, DS4) comprend exclusivement :
- le premier ensemble de données brutes de RSO (DS1) qui contient des échos radar d'un canal de polarisation (P1, P2) parmi une paire de canaux de polarisation (P1, P2) pour la première largeur entière (B1), dans lequel la paire de canaux de polarisation (P1, P2) comprend les premier et deuxième canaux de polarisation (P1, P2) ;
- le deuxième ensemble de données brutes de RSO (DS2) qui contient les échos radar de l'autre canal de polarisation (P1, P2), non utilisé dans le premier ensemble de données brutes de RSO (DS1), parmi la paire de canaux de polarisation (P1, P2) pour la première largeur entière (B1) ;
- le troisième ensemble de données brutes de RSO (DS3) qui contient les échos radar du quatrième canal de polarisation (P4) pour la seconde largeur entière (B2).

8. Procédé selon une des revendications 1 à 4, **caractérisé en ce que** la pluralité d'ensembles de données brutes de RSO (DS1, DS2, DS3, DS4) comprend exclusivement :
- le premier ensemble de données brutes de RSO (DS1) qui contient des échos radar d'un canal de polarisation (P1, P2) parmi une paire de canaux de polarisation (P1, P2) pour la première largeur entière (B1), dans lequel la paire de canaux de polarisation (P1, P2) comprend les premier et deuxième canaux de polarisation (P1, P2) ;
- le deuxième ensemble de données brutes de RSO (DS2) qui contient les échos radar du troisième canal de polarisation (P3) pour la seconde largeur entière (B2) ;
- le troisième ensemble de données brutes de RSO (DS3) qui contient les échos radar du quatrième canal de polarisation (P4) pour la seconde largeur entière (B2) ;
- un quatrième ensemble de données brutes de RSO (DS1) qui contient les échos radar de l'autre canal de polarisation (P1, P2), non utilisé dans le premier ensemble de données brutes de RSO (DS1), parmi la paire de canaux de polarisation (P1, P2) exclusivement pour la seconde largeur entière (B2).

9. Procédé selon une des revendications précédentes, **caractérisé en ce que** l'émission des impulsions radar (RP1, RP2) et la réception des échos radar s'effectuent au moyen d'une installation radar (1) qui comprend une antenne à réflecteur avec un réflecteur et un réseau de plusieurs antennes d'alimentation et/ou une antenne planaire avec un réseau de plusieurs éléments d'antenne.

10. Procédé selon une des revendications précédentes, **caractérisé en ce que** la pluralité d'ensembles de données brutes de RSO (DS1, DS2, DS3, DS4) est déterminée avec un dispositif informatique sur l'au moins un objet volant, puis est transmise à une station au sol sur la surface terrestre (GR).

11. Dispositif radar à synthèse d'ouverture pour la télédétection de la surface terrestre (GR) par le biais d'une installation radar (1) sur au moins un objet volant qui se déplace dans une direction azimutale (x) au-dessus de la surface terrestre (GR), dans lequel l'installation radar (1) est paramétrée de telle sorte qu'elle émet dans le mode d'émission des impulsions radar et reçoit dans le mode de réception les échos radar de ces impulsions radar (RP) réfléchis sur la surface terrestre (GR), dans lequel le dispositif radar à synthèse d'ouverture est configuré de telle sorte que
- des premières et secondes impulsions radar (RP1, RP2) sont émises en alternance par l'installation radar (1) dans le mode d'émission à des instants d'émission successifs, dans lequel une première impulsion radar respective (RP1) présente une première polarisation d'émission (H) et est émise avec un diagramme de rayonnement qui couvre une première largeur (B1) sur la surface terrestre (GR) dans une direction de portée (y) perpendiculaire à la direction azimutale (x), et dans lequel une seconde impulsion radar respective (RP2) présente une seconde polarisation d'émission (V) qui est différente de la première polarisation d'émission (H), et est émise avec un diagramme de rayonnement qui couvre une seconde largeur (B2) sur la surface terrestre (GR) dans la direction de portée (y), dans lequel la première largeur correspond à un premier couloir (SW1) dans la direction azimutale (x) sur la surface terrestre (GR) et la seconde largeur (B2) correspond à un second couloir (SW2) dans la direction azimutale (x) sur la surface terrestre (GR), dans lequel le premier couloir (SW1) contient le second couloir entier (SW2) et la seconde largeur (B2) est inférieure à la première largeur (B1) ;
- les échos radar des premières et secondes impulsions radar (RP1, RP2) sont reçus par l'installation radar (1) dans le mode de réception aussi bien dans une première polarisation de réception (H) que dans une seconde polarisation de réception (V), moyennant quoi des premier à quatrième canaux de polarisation (P1, P2, P3, P4) sont formés, dans lequel le premier canal de polarisation (P1) contient les échos radar des premières impulsions radar (RP1) reçus dans la première polarisation de réception (H), le deuxième canal de polarisation (P2) contient les échos radar des premières impulsions radar (RP1) reçus dans la seconde polarisation de réception (V), le troisième canal de polarisation (P3) contient les échos radar des secondes impulsions radar (RP2) reçus dans la première polarisation de réception (H) et le quatrième canal de polarisation (P4) contient les échos radar des secondes impulsions radar (RP2) reçus dans la seconde polarisation de réception (V) ;
- les échos radar reçus sont numérisés et plusieurs ensembles de données brutes de RSO (DS1, DS12, ..., DS4) sont déterminés au moyen de formation de faisceau numérique à partir des échos radar reçus, lesquels comprennent au moins :
i) un premier ensemble de données brutes de RSO (DS1) qui contient des échos radar d'un canal de polarisation (P1, P2) parmi une paire de canaux de polarisation (P1, P2) pour la première largeur entière (B1), dans lequel la paire de canaux de polarisation (P1, P2) comprend les premier et deuxième canaux de polarisation (P1, P2) ;
ii) un deuxième ensemble de données brutes de RSO (DS2) qui contient soit les échos radar de l'autre canal de polarisation (P1, P2), non utilisé dans le premier ensemble de données brutes de RSO (DS1), parmi la paire de canaux de polarisation (P1, P2) pour la première largeur entière (B1), soit qui contient les échos radar du troisième canal de polarisation (P3) pour la seconde largeur entière (B2) ;
iii) un troisième ensemble de données brutes de RSO qui contient les échos radar du quatrième canal de polarisation (P4) pour la seconde largeur entière (B2).

12. Dispositif selon la revendication 11, **caractérisé en ce que** le dispositif est agencé pour la réalisation d'un procédé selon une des revendications 2 à 10.
